# EUROPEAN PATENT SPECIFICATION

(11) **EP 3 714 105 B1**
(45) Date of publication and mention of the grant of the patent: **01.07.2026**
(21) Application number: 19721676.5
(22) Date of filing: 05.04.2019
(51) Int. Cl.: E02B 15/08

(54) **OIL SPILL BARRIER**
ÖLAUSLAUFSPERRE
BARRIÈRE ANTI MARÉE-NOIRE

(30) Priority: 12.04.2018 GB 201806059
(43) Date of publication of application: 30.09.2020
(73) Proprietor: Woosb Limited, Stoke-on-Trent ST6 4RZ (GB); Mai, Tai Thanh, Stoke-on-Trent ST6 4RZ (GB)
(72) Inventor: MAI, Tai Thanh, Stoke-on-Trent ST6 4RZ (GB)
(74) Representative: Maidment, Marc
(86) International application number: PCT/GB2019/051010
(87) International publication number: WO 2019/197807

(56) References cited:
- NO-A1- 20 130 281
- US-A- 3 499 291
- US-A- 3 645 099
- US-A- 4 016 726
- US-A- 5 000 616
- US-A1- 2003 185 629

## Description

The present invention relates to an oil spill barrier.

### BACKGROUND TO THE INVENTION

Oil spill booms are used to prevent oil from spreading over water in the event of an oil spill. The booms float on top of the water, extend beneath the water to some degree, and are used to contain floating contaminant oil. The booms can be used to control the position of oil which may need to be diverted or deflected in wind or a water current to a position where it can be pumped or skimmed off the water. They are also used to prevent oil reaching, for example beaches and populations of wildlife.

Booms are highly effective in very light wind and current situations and move up and down with the surface of the water, but a recognised problem of booms is that oil can move under a boom, particularly if the boom position is fixed in the face of a tide or current. Any inability of the boom to flex with wave motion can lead to contaminant draining underneath the boom, and if the boom does not extend high enough above the water, contaminant oil can escape over the top of the boom. If the boom has a number of units, oil can escape between the units.

A typical boom may have a PVC cylindrical upper which is inflated with air to enable it to float, with a weighted skirt extending down into the water, underneath the cylinder. The weight is provided by a chain and individual booms are held together by a stainless steel cable. Each boom may be of the order of 20 to 30 metres long. However, in rough conditions where there is choppy water the boom can become tangled up.

US2003/0185629 discloses a floating barrier wall including a number of individual barrier units each comprising a housing formed in the general shape of a highway barrier with a hollow interior which is preferably partially or completely filled with a foam material. A ballast weight is secured to each barrier unit, either along or beneath the bottom wall, to maintain them in an upright position in the water. Adjacent barrier units are mounted end-to-end to form a barrier wall which can encircle a vessel or otherwise isolate an area within a seaport to provide security.

US5000616 discloses an oil containment boom having a plurality of sections of a lighter than water, pliable, closed-cell foam material with each of the sections having a weight positioned along one side so that when the section is placed in the water the section floats with the weighted side beneath the water and the other side of the section above the water and a plurality of couplers for flexibly joining the ends of the sections.

It is an object of the present invention to provide an improved boom.

### STATEMENT OF INVENTION

According to the present invention, there is provided a barrier for use in an oil spill on water as claimed in claim 1.

The barrier (or boom) does not require inflation, so it can be deployed into water much more quickly than existing inflatable booms, and begins providing effective containment even as it is being deployed. The lack of inflation means that the barrier remains effective in all water and weather conditions. This is because wind and waves cannot effect substantial lift on the barrier, since there is no air-filled (and hence lightweight) surface portion to act on. Using a rigid planar member also substantially prevents the barrier from becoming tangled up with other barriers when deployed in water, which can be problematic for conventional inflated booms even in normal sea and wind conditions.

The weight distribution in the barrier means that stays upright in the water on its own. That is, the lower portion is biased to a submerged position, and the upper portion extends out of the water in the same plane as the lower portion. Wind and waves can tilt the barrier member, but it returns to a substantially upright position of its own accord. The position of the weight in or at the lower end of the lower portion keeps the lower end underwater. However, the barrier member is high enough above the surface of the water to substantially prevent oil from spilling over the top, even in rough seas, and deep enough that it substantially prevents swells from causing oil to escape under the barrier.

The barrier is suitable for use in any body of water, such as a lake, sea or ocean, in any weather or water conditions. The boom is also suitable for use in areas of running water, such as a river or tidal estuary. Whilst the barrier is primarily aimed for use in containing an oil spill on water, the barrier does have other applications. For example, the barrier may be used to contain a chemical spill on water. In another example. the barrier may be used generally as a floating fence or collection area, for example to contain debris (typically plastic) being collected as part of a marine clean-up operation.

Optional features are presented in the dependent claims.

The lower portion is thicker than the upper portion. The lower portion may be at least 1.5 times thicker than the upper portion. The lower portion may be substantially twice as thick as the upper portion. The lower portion may be substantially three times thicker than the upper portion. This lowers the centre of mass of the barrier, helping to ensure it remains upright in the water. It also minimises the tilting effect caused by wind acting on the exposed (above water) portion of the barrier.

The rigid planar member may be substantially symmetrical about a central vertical plane between its front and rear faces.

Front and rear faces of the lower portion of the rigid planar member may be substantially parallel to each other. Front and rear faces of the upper portion of the rigid planar member may be substantially parallel to each other.

The upper front face (that is, the front face of the upper portion) may be disposed closer to the plane of the upper or lower rear face than the lower front face (that is, the front face of the lower portion).

The upper rear face (that is, the rear face of the upper portion) may be disposed closer to the plane of the upper or lower front face than the lower rear face (that is, the rear face of the lower portion).

The upper portion may be substantially one third of the height of the barrier, and the lower portion may be substantially two thirds of the height of the barrier. This is very useful where the barrier is deployed in choppy waters. Having two thirds of the barrier under water substantially prevents oil from passing under the barrier, even in turbulent water. Where the lower portion is three times thicker than the upper portion, there is effectively a mass ratio of about 6:1 for the lower to upper portions of the planar member. This is before factoring in the weight in or attached to the lower end. This increases the inertia of the barrier, and increases the energy required to displace the barrier sufficiently for oil to escape containment.

A connection means is provided in each side of the barrier. The connection means comprises a tube extending along the side of the barrier. A longitudinal slot may be provided in the side of the tube. The connection means may allow a barrier to be connected to first and second barriers, one on each side. When a plurality of barriers are connected together, this can form a fence for containing an oil spill.

A flexible connection member may be provided for connecting first and second barriers together. The flexible connection member may comprise a sheet of waterproof fabric or material. The flexible connection member may have complementary connection means extending along each side of the fabric/material.

Using a flexible sheet allows the shape of the member to be manipulated. The connection members can in use establish smaller areas of calmer water (relative to the total area being contained by the fence). Oil can collect in (and optionally be collected from) these calmed areas. The distance between ends of the flexible connection member defines an entrance into the calmed area. The size of the entrance from the main area into the sheet-enclosed area depends on the degree to which the member is flexed or curved during use.

The complementary connection means may include cylindrical stems connected to the fabric. In use, the cylindrical stem of a flexible connection member may be located in a tube of the barrier, with the fabric/material extending through the slot. Preferably both cylindrical stems are identical, so that the flexible member can be used either way round.

The cylindrical stem can be slid into the tube to link the members. This provides a pivotal connection between the flexible member and the rigid planar member. When a series of members are linked together, this imparts some flexibility to the length of the barrier, and it can dissipate energy from waves and wind, reducing the risk of oil breaching containment. The connection between the planar and flexible members is also substantially leakproof, unlike existing booms. The cylindrical stem of the flexible connection member is located in a correspondingly shaped tube in the side of the rigid member. The small gap between these parts, which allows rotation, is not large enough for oil to leak through the connection in any significant quantity. The sheet may also prevent oil getting into the tube, if the flexible member is rotated sufficiently relative to the rigid member.

The cylindrical stem is preferably weighted or connects to the barrier so that the flexible connection member is not separable from the barrier by waves or wind. A locking member may engage the stem once it has been inserted into the tube.

The lower portion of the barrier may be provided with an upthrust receiving area. The upthrust receiving area may be disposed at the base of the rigid planar member. The upthrust receiving area is considered to be horizontal, such that when the barrier is disposed vertically in water, it is substantially the only region with a horizontal component facing into the water. The upper portion of the barrier may not include an upthrust receiving area. This means that the water can only exert an upwards force on the lower portion of the barrier. This reduces the likelihood of the barrier being lifted out of the water during rough weather, e.g. high winds and large swells, unlike inflated booms. Hence, the risk of oil being able to drain under the barrier is substantially mitigated.

An aperture may be provided through the upper portion of the barrier. A cable can be passed through the aperture. Where multiple barriers are provided as part of a barrier arrangement, some or all of the barriers may be controlled using the cable. This makes it easier to pack up the barriers once an oil spill has been contained and cleared. In some cases, the cable can be used to give rise to a concertina effect. By controlling the cable, oil can be deliberately migrated from one part of the barrier arrangement to another for collection. This concertina effect can be considered as a form of peristalsis or controlled contraction of the barrier, for transferring the oil along the barrier.

The planar member may be made of solid plastics. Using plastics for the rigid planar member means that the barrier can float without the need for a foam filling, and without the need for internal air pockets (whether isolated or inflatable). For example, solid PVC may be used. Any material that is resistant to weathering by oil and seawater is suitable for this purpose, with the caveat that it should be sufficiently buoyant in water. However, in some cases, a solid outer shell with a foam filling may be provided. This minimises the weight of the member for transport.

The solid planar member may be made of plastics having a density lower than that of water.

The weight may have a density greater than that of water. The material and/or mass of the weight may be selected to complement the dimensions and/or specific plastic of the planar member. This allows the barrier to be correctly weighted for providing around one third of the height of the barrier above water, and around two thirds of the height of the barrier below water. This is preferred for barrier stability and preventing oil escaping over or under the barrier.

The barrier has a compartment or chamber in which the weight is attached, secured or stored. The compartment may include a bore or slot in the lower portion of the planar member.

The compartment may include one or more sealing members to prevent water from entering the compartment. The planar member could be manufactured in such a way that the compartment is formed during the manufacturing process in the planar member.

The rigid planar member may include a member providing the upper portion, and secondary members to partially sandwiching that member on either side and providing the lower portion. The compartment may be provided by the outer planar members ending past the lower extent of the member forming the upper portion. The compartment may be partially open allowing the weight to come into contact with water. The compartment may be substantially enclosed around the weight by an additional planar member.

The weight may be built into or part of the barrier. The weight may be attached to compartment through an attachment means. The attachment means may be an adhesive, a resin, or a fixing member. The weight may be attached to the compartment through friction fitting. The weight may be held in a region inset from the base of the rigid planar member.

The weight may extend the width of the rigid planar member or only extend part of the width of the rigid planar member. The weight may be distributed in a plurality of units. The weight may be located centrally between the front and rear faces of the barrier.

By having a sealed compartment for the weight, it ensures that the weight will not deteriorate as a result of prolonged contact with sea water or oil, for example. Furthermore, it helps to prevent the weight from being dislodged during vigorous motion. If, however, the compartment is not sealed, it allows for the weight to be changed as needed. The various means of attachment allow for similar functions.

The height of the barrier is greater than the width of the barrier.

The flexible connection member may be wider than or about the same width as the barrier. If wider, it maximises the area of the flexible connecting members relative to the barriers, increasing the potential area of calmed zones for oil collection. If the same width, it reduces the propensity for the barriers and flexible connection members to become displaced from their original deployed configuration.

The flexible member may be substantially the same height as the rigid planar member.

A barrier arrangement or fence may be provided. The barrier arrangement may comprise a modular assembly two different types of units. The first unit may be a barrier according to the first aspect of the invention. The second unit may be a flexible connection member linking adjacent first units. The flexible connection member may have some or all of the features associated with the flexible connection member described above. The first and second units may be arranged in a repeating AB pattern (where A is the first unit and B is the second unit).

The barrier arrangement may comprise a plurality of barriers and a plurality of flexible connection members between adjacent barriers. The barrier arrangement may be provided as a kit, to be assembled on site. Alternatively, the barrier arrangement may be assembled prior to an oil spill occurring, and stored ready for deployment. As a preventative measure, the barrier arrangement can be provided around a ship (whilst docked) or around an oil rig during normal use of the rig, for example.

The barriers and flexible connection members may be connected in series in a regular alternating pattern. The barriers and flexible connection members may be arranged to form a plurality of minor areas as oil collection zones. The zones may be partially isolated from the major part of the area within the barrier arrangement.

Alternating between rigid planar members and flexible members means that the barrier arrangement can behave similarly at each region (i.e. subset of members) along its length. The minor areas that may be formed by the members (whether by a single member or a number of flexible and rigid members) are equivalent to the calmed or sheet-enclosed areas mentioned earlier.

Providing a pivotable/rotatable connection between the rigid planar members and the flexible members is preferred. It makes it easier to extend the barrier during deployment.

Each oil collection zone may be substantially V-shaped or trough-shaped when viewed from above. This allows the barrier arrangement to benefit from a concertina effect. Oil can collect in the zones and pumped out. When oil spill has been cleared, the barrier arrangement can be collected together easily by concertinaing the members together. As mentioned earlier, the concertina effect is a form of controlled contraction.

One or more cables may connect a given barrier to one or more adjacent barriers. The cables may be provided on one or both sides of the barrier. The cables strengthen the barrier, so that it remains intact under high stresses, e.g. during rough seas. Preferably, a cable connects the upper portions of the barriers, and another cable connects the lowers portions of the barriers.

Each flexible connection member may be wider than each of its neighbouring rigid planar members.

Each flexible connection member may be wider than each rigid planar member.

### BRIEF DESCRIPTION OF THE DRAWINGS

For a better understanding of the present invention, and to show more clearly how it may be carried into effect, reference will now be made by way of example only to the accompanying drawings, in which:
Figure 1A shows a front view of a barrier member according to the present invention, afloat in water;
Figure 1B shows a side view of the barrier member of Figure 1A;
Figure 2A shows a front view of a flexible connection member for connection to the barrier member of Figure 1A;
Figure 2B shows a perspective view of a cylindrical stem of the flexible connection member of Figure 2A; and
Figure 3 shows a front view of barrier members according to Figure 1A interconnected with flexible connection members according to Figure 2A, forming a barrier.

### DESCRIPTION OF PREFERRED EMBODIMENTS

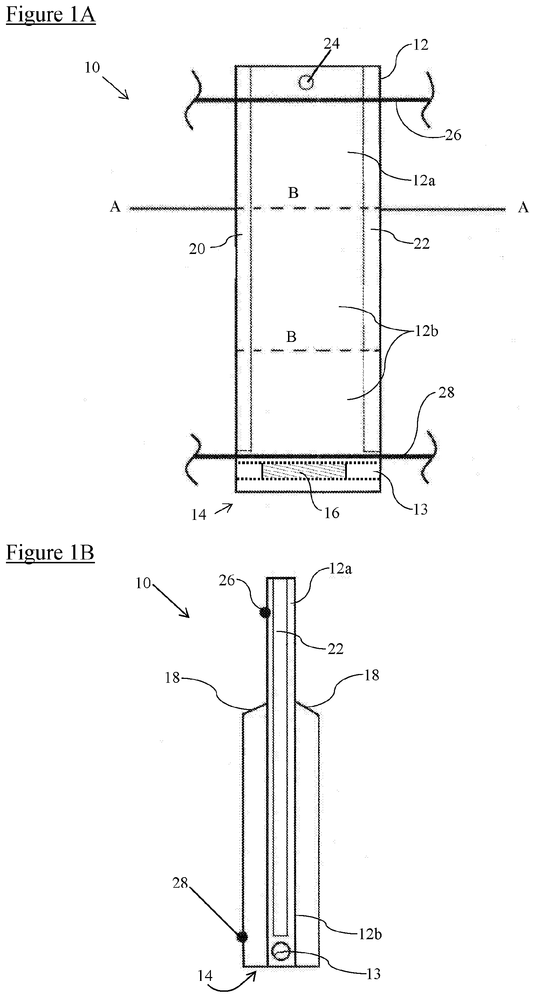

Referring firstly to Figures 1A and 1B, a barrier (or boom) is indicated generally at 10. The barrier 10 is floating in water, indicated by line A to either side of the barrier 10. The barrier 10 lies substantially upright in the water. In other words, the longitudinal axis of the barrier 10 is normal to the waterline A. The visible face of the barrier 10 is either the oil spill-facing side, or the side which faces away from an oil spill.

The barrier 10 includes a substantially rigid planar member 12. Dashed lines B show the planar member 12 divided into thirds for illustrative purposes only. The top third is an upper portion 12a of the barrier 10. The lower two thirds is a lower portion 12b of the barrier 10. It can be seen that, during use, the top third lies above the waterline A, and the remaining two thirds lie below the waterline A. The planar member 12 is made from solid PVC plastic in this embodiment.

The planar member 12 includes a bore 13 through its lower end. The bore 13 extends from one side of the lower end to the other. The lower end is indicated generally at 14. A weight 16 is provided in the bore 13. The weight 16 fills part of the bore 13 in this embodiment. The material used for the weight 16, and the amount of that material are selected to enable the planar member 12 to float as illustrated. The weight 16 is metal in this embodiment. The weight 16 should be as low as possible in the lower end 14.

It is normally preferred to isolate the weight 16 from the sea water to prevent corrosion. Therefore, the weight 16 can be isolated inside the planar member 12 by sealing the bore. Note that although a bore 13 is used in this embodiment, it will be appreciated that a recess, slot or other form of receiving area or connection area for a weight may be used in other embodiments.

Figure 1B shows the barrier 10 from the side. The lower portion 12b is three times as thick as the upper portion 12a. The top of the lower portion 12b includes angled surfaces 18 that slant to meet the surface of the upper portion 12a. It is apparent that the only surface which can receive upthrust from the water is at the lower end 14. There is no horizontal surface in the upper portion 12a which can receive an upwards force from the water. The lower end 14 is substantially flat in this embodiment.

The planar member 12 includes first and second tubes 20, 22 on either side. The tubes 20, 22 are substantially cylindrical in shape. Each tube 20, 22 is open at one side for receiving a flexible connection member. Each opening is narrower than the diameter of the corresponding tube. In this embodiment, the tubes 20, 22 have closed ends at a point above the bore 13. However, in other embodiments, if the weight is slotted in via the lower end 14 for example, then the tubes 20, 22 may continue down to the lower end 14. This is so that a lower end of the flexible connection member is provided at the same depth as the lower end 14 of the barrier 10.

The barrier 10 includes an aperture 24 running through the upper portion 12a. This aperture can have a cable (not shown) provided through it for use in deploying or stowing the barrier.

The barrier 10 includes upper and lower reinforcements in the form of cables 26, 28. The cables are made of nylon in this embodiment. The cables 26, 28 are attached to one side of the barrier 10. One cable 26 is connected to the upper portion 12a, and the other cable 28 is attached to the lower portion 12b. It will be appreciated that additional cables may be provided on the other side of the barrier in other embodiments. It will also be appreciated that the cables could be provided within the barrier, rather than on the surface. However, the position of the cables 26, 28 should be selected so as not to interfere with the flexible connection members (described below).

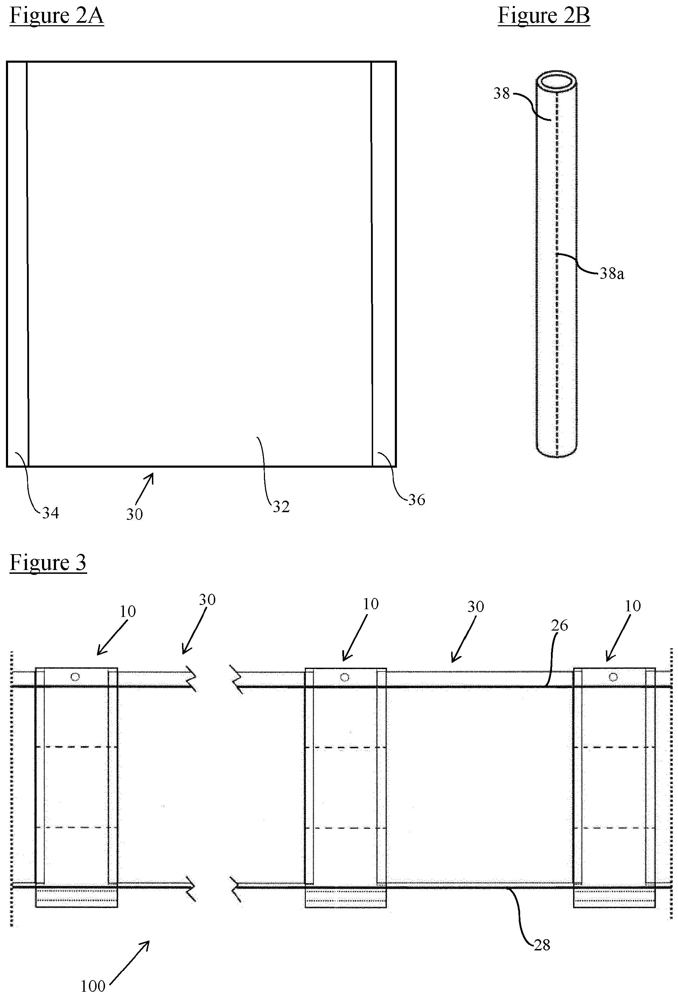

Referring also to Figures 2A and 2B, a flexible connection member is indicated generally at 30. The flexible connection member includes a sheet 32 connected between first and second stems 34, 36. The stems 34, 36 are cylindrical and smaller in diameter than the tubes 20, 22.

The sheet 32 is made of a waterproof material. In this embodiment, the material is nylon. The stems 34, 36 each run the full length of opposite sides of the sheet 32. Each stem 34, 36 is hollow in the middle. Each stem 34, 36 includes a slot (not shown). The slot is made by cutting along the length of the stem. This allows the sheet 32 to be inserted and the stem to be secured to the sheet 32.

The sheet 32 is approximately square in this embodiment. In other embodiments, the sheet may be wider than it is tall. Alternatively, the sheet 32 may be narrower than it is tall.

A secondary stem 38 is shown in Figure 2B. The secondary stem 38 is hollow. It includes a slot 38a along its length. The hollow portion of the stem 38 is sized to receive one of the stems 34, 36. The slot 38a is wide enough to receive the sheet 32. Another secondary stem 38 is provided for the other of the stems 34, 36. The outer dimensions of the secondary stem 38 match the dimensions of the tubes 20, 22.

Referring also to Figure 3, part of a barrier arrangement is illustrated, indicated generally at 100. The barrier arrangement 100 is a modular fence constructed from a plurality of barriers 10 and a plurality of interstitial flexible connection members 30. The flexible connection members 30 may have different widths, as indicated by the indefinite length of one of the members 30.

Each barrier 10 is connected on either side to first and second flexible connection members 30. Similarly, each flexible connection member 30 is connected on either side to first and second barriers 10. All of the barriers 10 are connected together by the same nylon cables 26, 28. The height of the flexible connection members 30 above water is substantially the same as the tops of the barriers 10.

The barrier arrangement 100 is assembled as follows. First, secondary stems 38 are placed around the stems 34, 36 of the flexible connection member 30. One of the secondary stems 38 is then slid into a tube 20 of one barrier 10. This links the flexible connection member 30 to the first barrier. The other of the secondary stems 38 is then slid into the tube 22 of a second barrier 10. Further flexible connection members 30 and barriers 10 are then connected in a similar manner. The cables 26, 28 are attached to each barrier 10 as the assembly is put together. The barrier arrangement 100 may be rolled up on a reel for storage, for example.

When an oil spill occurs, the barrier arrangement 100 is then deployed by using it to encircle the spill region. Where a large oil spill needs to be contained, a number of barrier arrangements 100 may be connected together in series.

In this embodiment, the barrier arrangement 100 should be arranged to form V-shaped regions approximating a zig-zag configuration. The apex of each V-shaped region contains calmer water, close to the barrier arrangement 100, and so oil can collect there.

The zig-zag pattern may be manipulated by using a cable through the apertures 24 in the barriers 10.

When the cause of the oil spill has been resolved, and no further oil is being spilt, the oil needs to be cleared up. The cable can be used to controllably contract the barrier arrangement 100. A winch mechanism may be used, for example. This closes up sections of the zig-zag configuration, where oil has collected. Consequently, although barrier arrangement may have a perimeter of many kilometres, oil can be transferred towards a single location for collection and disposal. This saves significant time and effort during clean-up operations. This also pulls in the barrier arrangement for storage after use.

These embodiments are provided by way of example only, and various changes and modifications will be apparent to persons skilled in the art without departing from the scope of the present invention as defined by the appended claims.

## Claims

1. A barrier (10) for use in an oil spill on water, comprising a substantially rigid planar member (12) made from plastics, in use, the upper portion (12a) of the rigid planar member extending vertically above the waterline (A) and the lower portion (12b) of the rigid planar member extending vertically beneath the waterline (A), in which the rigid planar member has a front face, a top side, a base side, a left side and a right side, and in which the lower portion (12b) of the rigid planar member is thicker than the upper portion (12a) of the rigid planar member and the barrier comprises a weight (16) disposed in a compartment or chamber within the rigid planar member, wherein
the top and base sides of the rigid planar member (12) each have a first length at the front face from the left side to the right side, and the left and right sides of the rigid planar member (12) each have a second length at the front face from the top side to the base side, the second length being greater than the first length, and
a connection means is provided in each of the left and right sides of the rigid planar member (12), in which each connection means comprises a tube (20, 22) extending along substantially the second length of the left or right side respectively of the rigid planar member (12), and a longitudinal slot in the side of the tube.

2. A barrier (10) as claimed in claim 1, in which the thickness of the lower portion (12b) of the rigid planar member (12) is at least 1.5 times, or three times, the thickness of the upper portion (12a) of the rigid planar member (12).

3. A barrier (10) as claimed in claim 1 or claim 2, in which the upper portion (12a) of the rigid planar member (12) is substantially one third of the height of the barrier, and the lower portion (12b) of the rigid planar member (12) is substantially two thirds of the height of the barrier.

4. A barrier (10) as claimed in any preceding claim, in which a flexible connection member (30) is provided for engagement in the longitudinal slot for connecting first and second barriers together, the flexible connection member comprising a sheet (32) of waterproof fabric and having complementary connection means extending along each side of the fabric.

5. A barrier (10) as claimed in claim 4, in which the complementary connection means includes cylindrical stems (34, 36) connected to the fabric, in use, the cylindrical stem of a flexible connection member (30) being located in a tube (20, 22) of the rigid planar member (12), with the fabric of the sheet (32) extending through the slot.

6. A barrier (10) as claimed in any preceding claim, in which only the lower portion (12b), and not the upper portion (12a), of the barrier is provided with an upthrust receiving area, the upthrust receiving area being provided by the base of the rigid planar member (12).

7. A barrier (10) as claimed in claim 3 or any of claims 4 to 6 when dependent on claim 3, in which the upper portion (12a) of the rigid planar member (12) includes an upper front face and an opposing upper rear face which are substantially parallel to each other, the lower portion (12b) of the rigid planar member (12) includes a lower front face and an opposing lower rear face which are substantially parallel to each other, and each of the upper front and rear faces is disposed above the lower portion and between the lower front and rear faces of the lower portion.

8. A barrier (10) as claimed in any preceding claim, in which the rigid planar member (12) is made of solid plastics or comprises a solid outer shell containing a foam filling.

9. A barrier (10) as claimed in claim 8, in which the solid planar member (12) is made of plastics having a density lower than that of water, and the weight (16) has a density greater than that of water.

10. A barrier (10) as claimed in any preceding claim, in which the compartment or chamber is substantially enclosed around the weight (16) by an additional planar member.

11. A barrier (10) as claimed in any preceding claim, in which the weight (16) is distributed in a plurality of units within the barrier.

12. A barrier arrangement (100) comprising a modular assembly of first and second units, where each first unit is a barrier (10) as claimed in any preceding claim, and where each second unit is a flexible connection member (30) linking a given adjacent pair of first units by being connected to the connection means at the right side of one of the first units of the adjacent pair and connected to the connection means at the left side of the other of the first units of the adjacent pair.

13. A barrier arrangement (100) as claimed in claim 12, when dependent on claim 4, in which the complementary connection means at each side of a given second unit extend along substantially each left and right side of the waterproof fabric/material, and the complementary connections means at each side of the given second unit are connected to the connection means respectively at the right and left sides of the first units of each adjacent pair.

14. A barrier arrangement (100) as claimed in claim 12 or claim 13, in which the second units are interstitial flexible connection members (30) which space apart one of the first units of the adjacent pair from the other of the first units of the adjacent pair.

## Patentansprüche

1. Barriere (10) zur Verwendung bei einem Ölaustritt auf Wasser, umfassend ein im Wesentlichen starres, planares Element (12) aus Kunststoffen, wobei sich der obere Abschnitt (12a) des starren, planaren Elements im Gebrauch vertikal über die Wasserlinie (A) erstreckt und der untere Abschnitt (12b) des starren, planaren Elements sich vertikal unter der Wasserlinie (A) erstreckt, wobei das starre, planare Element eine Vorderfläche, eine Oberseite, eine Unterseite, eine linke Seite und eine rechte Seite aufweist, und wobei der untere Abschnitt (12b) des starren, planaren Elements dicker ist als der obere Abschnitt (12a) des starren, planaren Elements und die Barriere ein Gewicht (16) umfasst, das in einem Fach oder einer Kammer innerhalb des starren, planaren Elements angeordnet ist, wobei
die Ober- und Unterseite des starren, planaren Elements (12) jeweils eine erste Länge an der Vorderfläche von der linken Seite zur rechten Seite aufweisen, und die linke und die rechte Seite des starren, planaren Elements (12) jeweils eine zweite Länge an der Vorderfläche von der Oberseite zur Unterseite aufweisen, wobei die zweite Länge größer als die erste Länge ist, und
ein Verbindungsmittel jeweils in der linken und der rechten Seiten des starren, planaren Elements (12) vorgesehen ist, wobei jedes Verbindungsmittel ein Rohr (20, 22), das sich im Wesentlichen entlang der zweiten Länge der linken bzw. der rechten Seite des starren, planaren Elements (12) erstreckt, sowie einen Längsschlitz in der Seite des Rohrs umfasst.

2. Barriere (10) nach Anspruch 1, wobei die Dicke des unteren Abschnitts (12b) des starren, planaren Elements (12) mindestens das 1,5-Fache oder das Dreifache der Dicke des oberen Abschnitts (12a) des starren, planaren Elements (12) beträgt.

3. Barriere (10) nach Anspruch 1 oder 2, wobei der obere Abschnitt (12a) des starren, planaren Elements (12) im Wesentlichen ein Drittel der Höhe der Barriere beträgt und der untere Abschnitt (12b) des starren, planaren Elements (12) im Wesentlichen zwei Drittel der Höhe der Barriere beträgt.

4. Barriere (10) nach einem der vorhergehenden Ansprüche, wobei ein flexibles Verbindungselement (30) zum Einrasten in den Längsschlitz zum Verbinden der ersten und der zweiten Barriere miteinander vorgesehen ist, wobei das flexible Verbindungselement eine Schicht (32) aus wasserdichtem Gewebe umfasst und komplementäre Verbindungsmittel aufweist, die sich entlang jeder Seite des Gewebes erstrecken.

5. Barriere (10) nach Anspruch 4, wobei die komplementären Verbindungsmittel zylindrische Schäfte (34, 36) umfassen, die mit dem Gewebe verbunden sind, wobei sich der zylindrische Schaft eines flexiblen Verbindungselements (30) im Gebrauch in einem Rohr (20, 22) des starren, planaren Elements (12) befindet, wobei sich das Gewebe der Schicht (32) durch den Schlitz erstreckt.

6. Barriere (10) nach einem der vorhergehenden Ansprüche, wobei nur der untere Abschnitt (12b) und nicht der obere Abschnitt (12a) der Barriere mit einem Auftriebs-Aufnahmebereich versehen ist, wobei der Auftriebs-Aufnahmebereich durch die Basis des starren, planaren Elements (12) bereitgestellt wird.

7. Barriere (10) nach Anspruch 3 oder einem der Ansprüche 4 bis 6, wenn sie von Anspruch 3 abhängen, wobei der obere Abschnitt (12a) des starren, planaren Elements (12) eine obere Vorderfläche und eine gegenüberliegende obere Rückfläche enthält, die im Wesentlichen parallel zueinander sind, der untere Abschnitt (12b) des starren, planaren Elements (12) eine untere Vorderfläche und eine gegenüberliegende untere Rückfläche enthält, die im Wesentlichen parallel zueinander sind, und jede der oberen Vorder- und Rückfläche oberhalb des unteren Abschnitts und zwischen den unteren Vorder- und Rückflächen des unteren Abschnitts angeordnet ist.

8. Barriere (10) nach einem der vorhergehenden Ansprüche, wobei das starre, planare Element (12) aus festen Kunststoffen besteht oder eine feste Außenschale umfasst, die eine Schaumstofffüllung enthält.

9. Barriere (10) nach Anspruch 8, wobei das feste, planare Element (12) aus Kunststoffen besteht, die eine geringere Dichte als Wasser aufweisen, und das Gewicht (16) eine höhere Dichte als Wasser aufweist.

10. Barriere (10) nach einem der vorhergehenden Ansprüche, wobei das Fach oder die Kammer um das Gewicht (16) herum im Wesentlichen durch ein zusätzliches planares Element umschlossen ist.

11. Barriere (10) nach einem der vorhergehenden Ansprüche, wobei das Gewicht (16) in einer Vielzahl von Einheiten innerhalb der Barriere verteilt ist.

12. Barriereanordnung (100), die eine modulare Baugruppe aus ersten und zweiten Einheiten umfasst, wobei jede erste Einheit eine Barriere (10) nach einem der vorhergehenden Ansprüche ist, und wobei jede zweite Einheit ein flexibles Verbindungselement (30) ist, das ein bestimmtes benachbartes Paar erster Einheiten verbindet, indem es mit den Verbindungsmitteln auf der rechten Seite einer der ersten Einheiten des benachbarten Paares verbunden ist und mit den Verbindungsmitteln auf der linken Seite der anderen der ersten Einheiten des benachbarten Paares verbunden ist.

13. Barriereanordnung (100) nach Anspruch 12, wenn er von Anspruch 4 abhängt, wobei sich die komplementären Verbindungsmittel an jeder Seite einer bestimmten zweiten Einheit im Wesentlichen entlang jeder linken und rechten Seite des wasserdichten Gewebes/Materials erstrecken und die komplementären Verbindungsmittel an jeder Seite der bestimmten zweiten Einheit mit den Verbindungsmitteln jeweils an der rechten und linken Seite der ersten Einheiten jedes benachbarten Paares verbunden sind.

14. Barriereanordnung (100) nach Anspruch 12 oder Anspruch 13, wobei die zweiten Einheiten interstitielle flexible Verbindungselemente (30) sind, die eine der ersten Einheiten des benachbarten Paares von der anderen der ersten Einheiten des benachbarten Paares beabstanden.

## Revendications

1. Barrière (10) pour une utilisation dans une marée noire, comprenant un élément plat (12) sensiblement rigide en plastique, lors de l'utilisation, la partie supérieure (12a) de l'élément plat rigide s'étendant verticalement au-dessus de la ligne de flottaison (A) et la partie inférieure (12b) de l'élément plat rigide s'étendant verticalement sous la ligne de flottaison (A), dans laquelle l'élément plat rigide a une face avant, un côté supérieur, un côté de base, un côté gauche et un côté droit, et dans laquelle la partie inférieure (12b) de l'élément plat rigide est plus épaisse que la partie supérieure (12a) de l'élément plat rigide et la barrière comprend un poids (16) disposé dans un compartiment ou une chambre à l'intérieur de l'élément plat rigide, dans laquelle
les côtés supérieur et de base de l'élément plat rigide (12) ont chacun une première longueur au niveau de la face avant du côté gauche au côté droit, et les côtés gauche et droit de l'élément plat rigide (12) ont chacun une deuxième longueur au niveau de la face avant du côté supérieur au côté de base, la deuxième longueur étant supérieure à la première longueur, et
un moyen de connexion est prévu dans chacun des côtés gauche et droit de l'élément plat rigide (12), dans laquelle chaque moyen de connexion comprend un tube (20, 22) s'étendant sensiblement le long de la deuxième longueur du côté gauche ou droit respectivement de l'élément plat rigide (12), et une fente longitudinale dans le côté du tube.

2. Barrière (10) selon la revendication 1, dans laquelle l'épaisseur de la partie inférieure (12b) de l'élément plat rigide (12) est au moins 1,5 fois, ou trois fois, l'épaisseur de la partie supérieure (12a) de l'élément plat rigide (12).

3. Barrière (10) selon la revendication 1 ou la revendication 2, dans laquelle la partie supérieure (12a) de l'élément plat rigide (12) est sensiblement un tiers de la hauteur de la barrière, et la partie inférieure (12b) de l'élément plat rigide (12) est sensiblement deux tiers de la hauteur de la barrière.

4. Barrière (10) selon l'une quelconque des revendications précédentes, dans laquelle un élément de connexion flexible (30) est prévu pour s'engager dans la fente longitudinale pour connecter ensemble les première et deuxième barrières, l'élément de connexion flexible comprenant une feuille (32) de tissu étanche et ayant des moyens de connexion complémentaires s'étendant le long de chaque côté du tissu.

5. Barrière (10) selon la revendication 4, dans laquelle les moyens de connexion complémentaires comportent des tiges cylindriques (34, 36) connectées au tissu, lors de l'utilisation, la tige cylindrique d'un élément de connexion flexible (30) étant située dans un tube (20, 22) de l'élément plat rigide (12), le tissu de la feuille (32) s'étendant à travers la fente.

6. Barrière (10) selon l'une quelconque des revendications précédentes, dans laquelle uniquement la partie inférieure (12b), et non la partie supérieure (12a), de la barrière est pourvue d'une zone de réception de poussée ascendante, la zone de réception de poussée ascendante étant fournie par la base de l'élément plat rigide (12).

7. Barrière (10) selon la revendication 3 ou l'une quelconque des revendications 4 à 6 lorsqu'elle dépend de la revendication 3, dans laquelle la partie supérieure (12a) de l'élément plat rigide (12) comporte une face avant supérieure et une face arrière supérieure opposée qui sont sensiblement parallèles l'une à l'autre, la partie inférieure (12b) de l'élément plat rigide (12) comporte une face avant inférieure et une face arrière inférieure opposée qui sont sensiblement parallèles l'une à l'autre, et chacune des faces avant et arrière supérieures est disposée au-dessus de la partie inférieure et entre les faces avant et arrière inférieures de la partie inférieure.

8. Barrière (10) selon l'une quelconque des revendications précédentes, dans laquelle l'élément plat rigide (12) est constitué de plastique solide ou comprend une enveloppe extérieure solide contenant un remplissage en mousse.

9. Barrière (10) selon la revendication 8, dans laquelle l'élément plat solide (12) est constitué de plastique ayant une densité inférieure à celle de l'eau, et le poids (16) a une densité supérieure à celle de l'eau.

10. Barrière (10) selon l'une quelconque des revendications précédentes, dans laquelle le compartiment ou la chambre est sensiblement enfermé(e) autour du poids (16) par un élément plat supplémentaire.

11. Barrière (10) selon l'une quelconque des revendications précédentes, dans laquelle le poids (16) est réparti en une pluralité d'unités à l'intérieur de la barrière.

12. Agencement de barrière (100) comprenant un ensemble modulaire de première et deuxième unités, dans lequel chaque première unité est une barrière (10) selon l'une quelconque des revendications précédentes, et dans lequel chaque deuxième unité est un élément de connexion flexible (30) reliant une paire adjacente donnée de premières unités en étant connectée aux moyens de connexion au niveau du côté droit de l'une des premières unités de la paire adjacente et connectée aux moyens de connexion au niveau du côté gauche de l'autre des premières unités de la paire adjacente.

13. Agencement de barrière (100) selon la revendication 12, lorsqu'il dépend de la revendication 4, dans lequel les moyens de connexion complémentaires au niveau de chaque côté d'une deuxième unité donnée s'étendent sensiblement le long de chaque côté gauche et droit du tissu/matériau imperméable, et les moyens de connexion complémentaires au niveau de chaque côté de la deuxième unité donnée sont connectés aux moyens de connexion respectivement au niveau des côtés droit et gauche des premières unités de chaque paire adjacente.

14. Agencement de barrière (100) selon la revendication 12 ou la revendication 13, dans lequel les deuxième unités sont des éléments de connexion flexibles interstitiels (30) qui écartent l'une des premières unités de la paire adjacente de l'autre des premières unités de la paire adjacente.
